Europäisches Patentamt

European Patent Office

Office européen des brevets

(19)

(11) Publication number: **0 335 270**

**A1**

(12) # EUROPEAN PATENT APPLICATION

(21) Application number: **89105274.8**

(22) Date of filing: **23.03.89**

(51) Int. Cl.4: **B29C 65/20**

(30) Priority: **28.03.88 DK 1711/88**

(43) Date of publication of application:
**04.10.89 Bulletin 89/40**

(84) Designated Contracting States:
**AT BE CH DE ES FR GB GR IT LI LU NL SE**

(71) Applicant: **Evald A. Nyborg A/S
Granlyet 8
DK-3540 Lynge(DK)**

(72) Inventor: **Nyborg, Henrik
Hojeloft Vange 148
DK-3500 Varlose(DK)**

(74) Representative: **Fincke, Karl Theodor,
Dipl.-Phys.Dr. et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel Postfach
860820
D-8000 München 86(DE)**

(54) **An apparatus for sequential sealing of at least two endless panels of thermoplastic material along predetermined outlines and for cutting articles from one or more of such endless panels.**

(57) In an apparatus for sequential sealing of panels and for cutting articles from panels of thermoplastic material, said apparatus being of the type comprising two compressible sealing dies, an upper die (2) and a lower die (1) respectively, between which the panels (11) are sequentially conveyed and sealed as well as a separating belt (9) situated between the lower die and the panels for preventing the latter from sticking to the lower die (1), the upper die (2) is movable and operates at a temperature of about 100 to 120° C, while lower die (1) is stationary and operates at a temperature of about 200 to 250° C. The apparatus is further provided with a heat-insulating curtain (14) movable to and from a position between the lower die (1) and the panels (11) and a position at a distance the working area of the lower die (1). As a result the sealing process can be temporarily interrupted without the panels (11) in the sealing apparatus being damaged or destroyed and without lowering the temperature of the lower die (1).

Fig. 1

## An apparatus for sequential sealing of at least two endless panels of thermoplastic material along predetermined outlines and for cutting articles from one or more of such endless panels

The present invention relates to an apparatus for sequential sealing of at least two endless panels of thermoplastic material, preferably polypropylene along predetermined outlines and for cutting articles from one or more of such endless panels, said apparatus being of the type comprising two heatable, compressible sealing dies, an upper die and a lower die, respectively, between which the endless panels are sequentially conveyed and sealed and/or the articles are cut, as well as a separating belt situated between the lower die and the endless panels for preventing the latter from sticking to the lower die, and where the upper die is optionally provided with means for making embossments, folding lines and weakening lines.

DE-OS No. 22 44 820 discloses sealing dies of the above type possessing a movable, heatable upper die and a stationary lower die, where the panels to be sealed are inserted between the dies. To prevent the panels from sticking to the heatable die during the sealing a belt of heat-resistant plastic material, such as teflon, is streched above the lower die. The ends of the belt are secured by rods. The disadvantage of this apparatus is that the parts of the panels between the sealing dies are exposed to an excessive amount of heat during a temporary stop of the apparatus, thus crumpling the material.

The object of the present invention is to provide an apparatus of the above type, where the sealing can be interrupted while the panels are inside the apparatus without shutting off the heat supply and without the panels being damaged.

The apparatus according to the invention is characterized in that the upper die is movable in a manner known per se while the lower die is stationary, and that the upper die operates at a temperature of about 100 to 120° C, while the lower die operates at a temperature of about 200 to 250° C, the separating belt being either stationary or movable depending on the temperature of the lower die and the type of thermoplastic material to be sealed, said separating belt extending above the lower die and covering it completely, said apparatus being further provided with a heat-insulating curtain of at least the same size as the extension of the lower die, said curtain being movable to and from a position between the lower die and the separating belt for protecting the endless panels from the heat of the lower die and a position at a distance from the working area of the lower die.

As a result the desired sealings and cuttings can be performed quickly and efficiently without risking that the parts of the panels inside the apparatus are damaged and crumpled as a result of too much heat radiating from the lower die when the apparatus is temporarily stopped.

In one embodiment of the apparatus according to the invention the heat-insulating curtain is a sliding curtain moveable in a substantially horizontally plane between the lower die and the panels. This embodiment of the inventive apparatus can be employed when it is not desired to wind the heat-insulating curtain.

In another embodiment of the apparatus according to the invention the heat-insulating curtain is a windable curtain which is made to unwind from a wound position at the side of the apparatus, where the panels are inserted, and with its free end being drawn forward between the lower die and the panels to heat-shield the latter, whereupon the curtain is retracted and rewound. This embodiment is preferred when using windable, flexible curtains. Moreover the apparatus requires little space.

Advantageously the heat-insulating curtain is secured with draw means, such as cords, belts, chains or rods, and retracting means for drawing forward and retracting the curtain in a manner known per se to positions above and at a distance to the lower die, respectively, thus ensuring a reliable movement of the heat-insulating curtain.

In a preferred embodiment of the apparatus according to the invention the heat-insulating curtain is a sliding curtain, the two opposite lateral edges of which being secured to the combined draw means and retracting means in form of two endless chains each situated opposite one edge of the panels and the sealing dies, said chains being rotatable round the lower die in such a way that they are guiding the heat-insulating curtain forward in the direction of conveyance of the panels above the lower die and back below the latter, position indicators for controlling the movement of the chains being provided so that the heat-insulating curtain can be stopped in two positions of rest above and at distance from the lower die, respectively. This embodiment of the apparatus also requires little space. Moreover the heat-insulating curtain is always adjacent to the panels drawn in the direction of conveyance of the panels, thus being movable by a simple drive unit driving in only one direction. Controlling the drive unit by means of position indicators ensures a constant, correct positioning of the heat-insulating curtain with respect to the lower die.

According to the invention the apparatus the activation of the draw means and/or retracting means of the heat-insulating curtain is connected to the other function of the apparatus in such a way that the draw means are automatically activated if the conveyanse of the panels is not started within a predetermined period of time after the upper die has been lifted from the lower die, and the activation of the retracting means is the first step of the starting procedure of the apparatus. Thus the apparatus is easily operated since the heat-insulating curtain is activated without an operator having to direct his/her attention thereto.

In an especially preferred embodiment of the apparatus according to the invention the lateral edges of the separating belt are secured to the two endless chains, said belt forming an endless belt either alone or in conjunction with the heat-insulating curtain secured to the chains, preferably in such a way that the separating belt extends all the way along the endless chains and that the heat-insulating curtain is situated at the side of the separating belt facing the lower die along a distance substantially corresponding to half the length of the endless chains. This results in a very practical embodiment of a combined separating belt and heat-insulating curtain. This combination together with the automatic activation ensures that depending on prevailing requirements either the separating belt or the heat-insulating curtain are situated between the lower die and the panels. The fact that the separating belt completely covers the heat-insulating curtain has the additional advantage that only the surface of the separating belt comes into contact with the panels, said surface being the smoothest.

In an especially simple embodiment of the apparatus according to the invention one end of the separating belt is detachable fastened to the panel insertion side of the apparatus, the said belt loosely extending in the direction of conveyance of the panels above the lower die, allowing an easy and fast exchange of the separating belt.

Suitably the heat-insulating curtain comprises a heat-insulating material a metal foil or a heat-insulating material with a metal coating, such as a pasted-on metal foil.

Preferably the separating belt is made of polyimide, a highly heat-resisant material.

Finally, the apparatus according to the invention comprises a cooling station following behind the sealing dies, seen in the direction of conveyance of the panels, said cooling station comprising two separate, opposite, heat-conducting, air-cooled plates consisting for instance of aluminium for cooling the sealed or cut panels from both sides, thus contributing to eliminate the tendency of the panels to crumple.

The invention is described in greater detail below and with reference to the accompanying drawings, in which

Figure 1 is a diagrammatic, vertical, longitudinal, sectional view of a preferred sealing apparatus according to the invention,

Figure 2 is a sectional view along the line A-A of the embodiment of Figure 1,

Figure 3 is a diagram of a control circuit of the drive unit driving the draw means and retracting means of the heat-insulating curtain,

Figure 4 is a diagrammatic, vertical, longitudinal, sectional view of a preferred sealing apparatus with an endless, combined separating belt and heat-insulating curtain,

Figure 5 is a diagrammatic, longitudinal, sectional view of an alternative embodiment with an endless, combined separating belt and heat-insulating curtain, and

Figure 6 is a diagrammatic, vertical, longitudinal, sectional view analogous to Figure 1 of an other embodiment of the apparatus according to the invention.

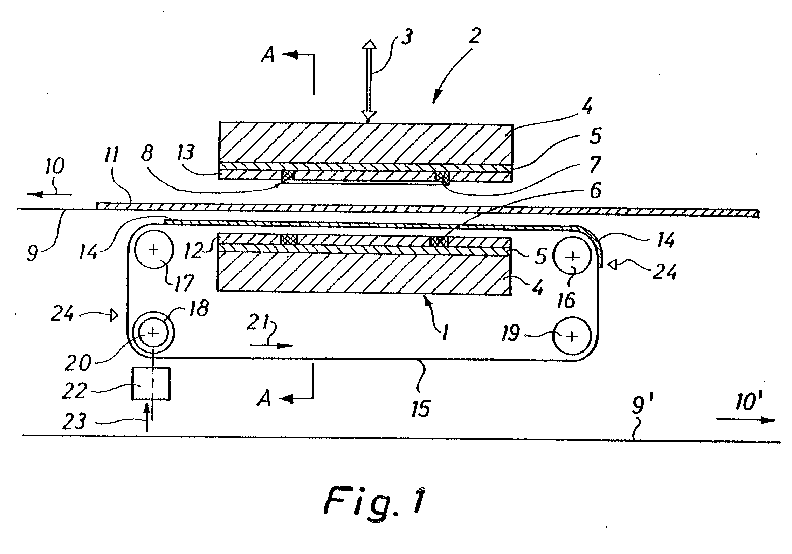

Figure 1 is a diagrammatic, vertical, longitudinal, sectional view of a sealing apparatus according to the invention, for the sake of clarity not showing the support and control parts. The apparatus comprises two heatable, compressible sealing dies, a stationary lower die 1 and a upper die 2 vertically reciprocatable in the direction indicated by the arrow 3. Each sealing die comprises a heatable plate 4 with thermostats (not shown) as well as a mounting plate 5 carrying a lower electrode 6 and an upper electrode 7, respectively. The outline of the latter is provided with an elevated sharp edge 8 for cutting the articles. The apparatus shown is to be used with an endless separating belt 9, 9' sequentially drawn forward in a manner known per se between the two sealing dies 1, 2 in the direction of conveyance as indicated by the arrow 10 and back below the sealing dies in the direction indicated by the arrow 10'. The separating belt 9 simultaneously acts as a conveyor belt for the panels 11 to be sealed, said panels being adjusted above the separating belt 9 in such a way that the separating belt prevents the panels 11 from sticking to the lower electrode 6. By means of heating means and thermostats (not shown) the temperature of the upper die is maintained at 100 to 120°C and the temperature of the lower die between 200 and 250°C. Moreover the lower die 1 is provided with a heat-insulating plate 12 on top of the mounting plate 5 surrounding the lower electrode and being situated inbetween the gaps created by its individual elements, said heat-insulating plate being of about the same thickness as the lower electrode. The upper die 2 may be insulated by a similar plate 13. The apparatus is furthermore equipped with a heat-insulating curtain 14 the opposite lateral edges of which are secured to endless chains 15, 15' rotating on chain wheels 16, 17, 16', 17' substantially flushing with the upper edge of the lower die, as well as on chain wheels 18, 19, 18', 19' below the lower die. Opposite chain wheel pairs 16, 16', 17, 17', 18, 18', and 19, 19' are each mounted on one shaft. The shaft 18'' carrying the chain wheel pair 18, 18' also carries a drive motor 20, for instance an air driven motor, causing the two chains 15, 15' to rotate on the chain wheels. When the upper die 2 is lifted from the separating belt 9 the rotation of the chain wheel causes the heat-insulating curtain 14 secured between the chains 15, 15' to be moved to and from a position between the lower die 1 and the separating belt 9 and a position at a distance from the lower die 1. The chains 15, 15' and the heat-insulating curtain 14 are moved in the same direction as the separating belt 9, as indicated by the arrows 10 and 21. A control unit 22 in the supply path of the propellant 23 to the drive motor 20 and position indicators 24 control the movement and position of the heat-insulating curtain 14.

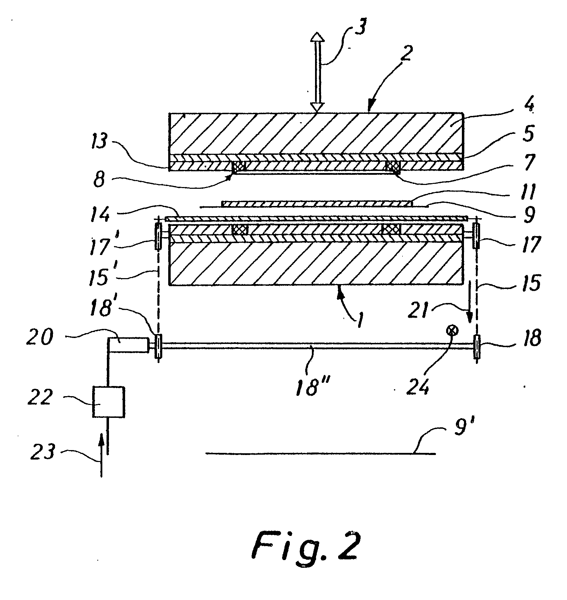

Figure 2 is a sectional view along the line A-A . of Figure 1. Figures 1 and 2 show the sealing dies with lifted upper die 2 and with the heat-insulating curtain 14 in a position between the lower die 1 and the above separating belt 9 carrying the panels 11.

In principle the apparatus operates as follows. The separating belt 9 with the panels 11 is sequentially conveyed over a distance corresponding to the length of the article to be sealed plus the necessary space between to subsequent articles. Immediately before or simultaneous with the movement of the separating belt 9 the heat-insulating curtain 14 is drawn from the position shown in Figure 1 to a position where the heat-insulating curtain is at a distance from the lower die 1. The sealing is performed by pressing the upper die 2 down against the lower die 1 for a sufficiently long period to perform the sealing and optionally the cutting, whereupon the upper die is lifted. The separating belt 9 carrying the panels 11 is again conveyed over the above distance and an article is sealed and optionally cut, these operations continuing until the process is interrupted. In this case the drive motor automatically causes the heat-insulating curtain 14 to glide into the position shown in Figure 1 between the lower die 1 and the separating belt 9. Thus there is no undesired heat transfer from the lower die 1 to the panels 11 during a temporary stop of the apparatus although the heat supply to the sealing dies 1, 2 is not interrupted nor are the dies cooled.

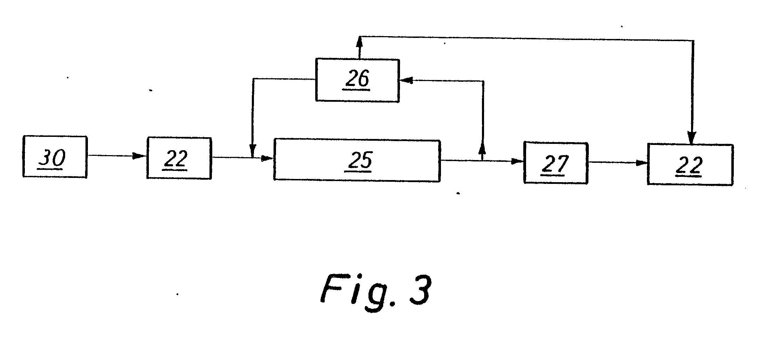

Figure 3 illustrates a diagram of the drive unit controlling the movement of the heat-insulating curtain 14. Pressing the starter 30 results in a signal to the control unit 22 to draw the heat-insulating curtain 14 from the position shown in Figure 1 to a position at a distance from the lower die 1, said movement being controlled by the position indicators 24 adjacent the chain wheel 18 of Figure 1. Simultaneously a signal is emitted to the other apparatus control 25 starting and controlling the sequential sealing. The latter process is monitored by a time monitor 26. In case the separating belt 9 is not reconveyed within a predetermined period of time after the upper die 2 has been lifted off the separating belt a signal is emitted to the control unit 22 causing the heat-insulating curtain to glide into the position shown in Figure 1. A corresponding signal is emitted to the control unit 22 when the stop button 27 is activated.

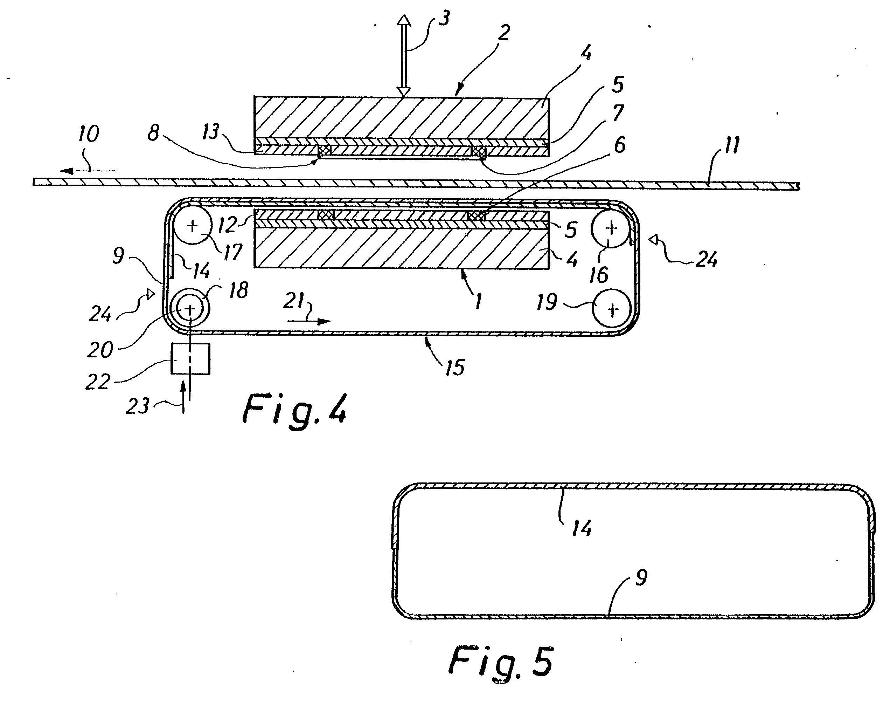

Figure 4 is a diagrammatic, vertical, longitudinal sectional view of an alternative preferred sealing apparatus according to the invention. Except for the separating belt it is mostly analogous to the embodiment of Figures 1 and 2. In this embodiment the separating belt 9 is not used to convey the panels 11 to be sealed but only to separate the panels 11 from the lower die 1. Moreover the separating belt 9 is secured to the endless chains 15, 15' together with the heat-insulating curtain so that the heat-insulating curtain 14 is situated on the side of the separating belt 9 facing the lower die 1.

Figure 5 shows an alternative embodiment of the combined separating belt 9 and heat-insulating curtain 14, where the two parts substantially do not overlap each other and are only joined at their ends to form an endless belt. Each part 9, 14 extends along about half the length of the endless chains 15, 15'.

Instead of being secured to the chains 15, 15' the endless combined separating belt 9 and heat-insulating curtain 14 described in Figures 4 and 5 can only be guided round rollers having the same position as the chain wheels 16, 17, 18, 19. A suitable tension of the chains 15, 15' and of the endless combined belt is obtainable by spring action on the wheels or rollers (not shown), for instance on 16, 19, or by force of gravity acting on chain wheels 18 and 19.

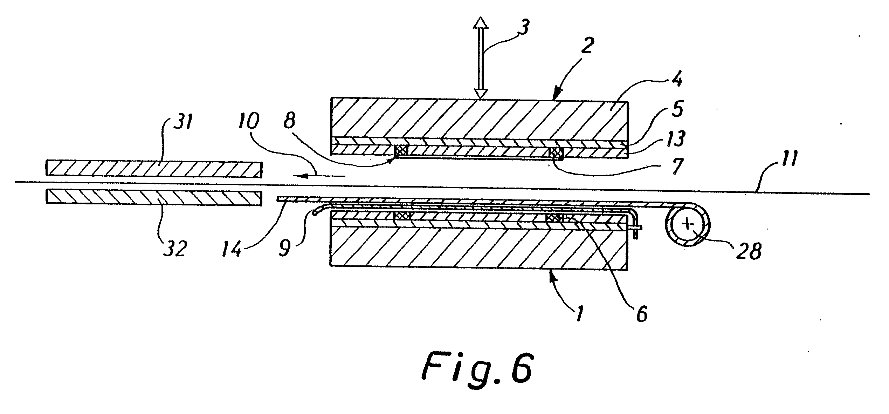

Figure 6 is a diagrammatic, vertical, longitudinal sectional view analogous to the one of Figure 1 of an alternative embodiment of the apparatus according to the invention. Except for the separating belt 9 the sealing apparatus corresponds to the one of Figures 1 and 2, for which reason the same reference numerals are used for corresponding parts. In this embodiment the separating belt 9 is of a comparatively short length, one end being detachably fastened to the panel insertion side of the apparatus. From there the separating belt extends loosely over the lower die 1 in the direction of conveyance 10 of the panels 11. The heat-insulating curtain 14 has the form of a windable curtain. The free end of the curtain can be drawn (not shown) from a wound position at distance from the sealing dies at the panel insertion side of the apparatus over the separating belt 9 so that the curtain 14 comes to be positioned between the separating belt 9 and the panels 11 protecting the latter from the heat of the lower die 1. The windable curtain 14 is drawn away from the sealing dies by retracting the curtain in a directon opposite to the one indicated by the arrow 10, simultaneously rewinding said curtain on the roller 28 situated at a distance from the lower die 1. Figure 6 also shows a cooling station comprising two opposite, separate, heat-conducting, air-cooled plates 31, 32, made of for instance aluminium, each plate being situated on one side of the panels 11 to be sealed for cooling them. The cooling station is directly behind the sealing dies in the direction of conveyance 10 of the panels 11. A corresponding cooling station may be employed in connection with the embodiments of the apparatus according to the invention shown in Figures 1 to 5.

The panels to be sealed are preferably made of polypropylene. A suitable material for the separating belt 9 is polyimide, and the material for the windable curtain may for instance be glass cloth of a thickness of 2 to 5 mm with a metal foil coating on the side facing the lower die.

## Claims

1. An apparatus for sequential sealing of at least two endless panels (11) of thermoplastic material, preferably polypropylene, along predetermined outlines and for cutting articles from one or more of such endless panels, said apparatus being of the type comprising two heatable, compressible sealing dies, an upper die (2) and a lower die (1), respectively, between which the endless panels are sequentially conveyed and sealed and/or the articles are cut, as well as a separating belt (9) situated between the lower die (1) and the endless panels (11) for preventing the latter from sticking to the lower die, and where the upper die (2) is optionally provided with means for making embossments, folding lines and weakening lines, characterised in that the upper die (2) is movable in a manner known per se while the lower die (1) is stationary, and that the upper die (2) operates at a temperature of about 100 to 120° C, while the lower die (1) operates at a temperature of about 200 to 250° C, the separating belt (9) being either stationary or movable depending on the temperature of the lower die (1) and the type of thermoplastic material to be sealed, said separating belt (9) extending above the lower die (1) and covering it completely, said apparatus being further provided with a heat-insulating curtain (14) of at least the same size as the extension of the lower die, said curtain (14) being movable to and from a position between the lower die (1) and the separating belt (9) for protecting the endless panels from the heat of the lower die and a position at a distance from the working area of the lower die.

2. An apparatus as claimed in claim 1, characterised in that the heat-insulating curtain (14) is a sliding curtain moveable in a substantially horizontally plane between the lower die (1) and the panels (11).

3. An apparatus as claimed in claim 1, characterised in that the heat-insulating curtain (14) is a windable curtain which is made to unwind from a wound position at the side of the apparatus, where the panels are inserted, and with its free end being drawn forward between the lower die (1) and the panels (11) to heat-shield the latter, whereupon the curtain is retracted and rewound.

4. An apparatus as claimed in any of the preceding claims 1-3, characterised in that the heat-insulating curtain (14) is secured with draw means, such as cords, belts, chains or rods, and retracting means (15, 15') for drawing forward and retracting the curtain in a manner known per se to positions above and at a distance from the lower die (1), respectively.

5. An apparatus as claimed in claim 4, characterised in that the heat-insulating curtain is a sliding curtain, the two opposite lateral edges of which being secured to the combined draw means and retracting means in form of two endless chains (15, 15') each situated opposite one edge of the panels (11) and the sealing dies (1, 2), said chains being rotatable round the lower die (1) in such a way that they are guiding the heat-insulating curtain forward in the direction of conveyance (10) of the panels (11) above the lower die and back below the latter, position indicators (24) for controlling the movement of the chains being provided so that the heat-insulating curtain can be stopped in two positions of rest above and at a distance from the lower die (1), respectively.

6. An apparatus as claimed in claim 4 or 5, characterised in that the activation of the draw means and/or retracting means (15, 15') of the heat-insulating curtain (14) is connected to the other function of the apparatus in such a way that the draw means are automatically activated if the conveyanse of the panels is not started within a predetermined period of time after the upper die (2) has been lifted from the lower die (1), and the activation of the retracting means is the first step of the starting procedure of the apparatus.

7. An apparatus as claimed in claim 5 or 6, characterised in that the lateral edges of the separating belt (9) are secured to the two endless chains (15, 15'), said belt forming an endless belt either alone or in conjunction with the heat-insulating curtain (14) secured to the chains (15, 15'), preferably in such a way that the separating belt (9) extends all the way along the endless chains (15, 15') and that the heat-insulating curtain (14) is situated at the side of the separating belt (9) facing the lower die (1) along a distance substantially corresponding to half the length of the endless chains (15, 15').

8. An apparatus as claimed in any of the preceding claims 1-6, characterised in that one end of the separating belt (9) is detachable fastened to the panel insertion side of the apparatus, the said belt loosely extending in the direction of conveyance (10) of the panels above the lower die (1).

9. An apparatus as claimed in any of the preceding claims 1-8, characterised in that the heat-insulating curtain (14) comprises a heat-insulating material a metal foil or a heat-insulating material with a metal coating, such as a pasted-on metal foil.

10. An apparatus as claimed in any of the preceding claims 1-9, characterised in that the separating belt (9) is made of polyimide.

11. An apparatus as claimed in any of the preceding claims 1-10, characterised in that it comprises a cooling station (31, 32) following behind the sealing dies (1, 2), seen in the direction of conveyance (10) of the panels (11), said cooling station comprising two separate, opposite, heat-conducting, air-cooled plates consisting for instance of aluminium for cooling the sealed or cut panels from both sides.

Fig. 1

Fig. 2

EP 0 335 270 A1

*Fig. 3*

Fig.4

Fig.5

Fig. 6

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE,A, 2 212 089 (WILHELM HEISIG) --- | 1 | B 29C 65/20 |
| A | DE,A, 2 244 820 (FELIX STIEGLER MASCHINENFABRIK) --- | 1 | |
| A | US,A, 4 545 844 (BRADLEY A BUCHANAN) --- | 1 | |

TECHNICAL FIELDS
SEARCHED (Int. Cl.4)

B 29 C

The present search report has been drawn up for all claims

| Place of search | Date of completion of the search | Examiner |
|---|---|---|
| STOCKHOLM | 22-06-1989 | NILSSON J. |